# EUROPEAN PATENT SPECIFICATION

(11) **EP 3 945 130 B1**
(45) Date of publication and mention of the grant of the patent: **07.06.2023**
(21) Application number: 20187891.5
(22) Date of filing: 27.07.2020
(51) Int. Cl.: C12H 3/02, C12C 12/04, B01D 3/10

(54) **PLANT AND METHOD FOR REDUCING AN ALCOHOL CONTENT IN A BEVERAGE**
ANLAGE UND VERFAHREN ZUR REDUZIERUNG DES ALKOHOLGEHALTES IN EINEM GETRÄNK
INSTALLATION ET PROCÉDÉ DE RÉDUCTION DE LA TENEUR EN ALCOOL D'UNE BOISSON

(43) Date of publication of application: 02.02.2022
(73) Proprietor: API Schmidt-Bretten GmbH & Co. KG, 75015 Bretten (DE)
(72) Inventor: Teuber, Wilfried, 75033 Gondelsheim (DE)
(74) Representative: Mammel und Maser Patentanwälte PartG mbB

(56) References cited:
- WO-A1-2018/100247
- US-A- 5 034 238
- US-A1- 2018 179 480

## Description

The invention relates to a plant and a process for reducing the alcohol content in a beverage.

From DE 38 43 516 A1 such a plant for reducing the alcohol content of a beverage is known. This plant comprises a degasser to which the alcoholic beverage is fed from a storage container. Furthermore, a rectifier with a first and a second column is provided. A line branching off from the second column leads reduced-alcohol beverage to a separator, from which this reduced-alcohol beverage is discharged from the plant via an outlet line or fed to a collecting vessel. A condenser and a cooler are provided downstream of the rectifier. An alcohol concentrate can be discharged from the cooler.

Vapours are separated by the rectifier. These vapours may include alcohol, perfumes and/or aromatic substances. The alcohol is separated from the vapours. The rectifier is integrated in a closed circuit so that the vapours discharged in the rectifier are returned to the rectifier after the alcohol has been separated out and after cooling.

After the alcohol has been separated from the vapours, the alcohol no longer required is removed from the plant via a controller and transferred to an alcohol tank. This regulator is designed as a needle valve which can be adjusted by hand. This means that during operation of the plant a constant check of a display on the needle valve is necessary, which may also require manual readjustment. In addition, a manual adjustment is required in each case when the alcohol content in the condensate to be drained changes.

US 2018/0179480 A1 discloses a plant for de-alcoholising alcoholic beverages comprising a rectification column having two packings arranged spatially adjacent one above the other and having at least one inlet for the alcoholic beverage, a sump and a top. The rectification column being operable such that the de-alcoholised beverage is removed from the sump and exhaust vapour is removable from the top. At least one evaporator is configured to supply the rectification column with vapour. A condenser arrangement condenses the exhaust vapour removed from the top of the rectification column, at least in part. The plant further includes a heat pump which can operate the evaporator as well as the condenser arrangement. The plant further comprises a separator and an outlet to a storage tank for the de-alcoholised beverage.

WO 2018/100247 A1 further discloses an apparatus and a method for alcoholic beverage dealcoholisation. This device is provided for the use in a household and in restaurants.

US 5 034 238 A discloses a process for reduction of the alcohol content of alcoholic beverages. Aromatic substances are extracted with a liquid or supercritical CO₂. Alcohol is separated by distillation and extracted aromatic substances are at least partially recycled to the beverage with reduced alcohol content.

The invention is based on the task of proposing a plant and a process for reducing an alcohol content in a beverage, which enables simple control and monitoring for discharging a condensate with an adjustable alcohol content.

This task is solved by a plant for reducing an alcohol content in a beverage, in which a line carrying a condensate comprises a control valve to which a return line leading into a first column of the rectifier is connected and a discharge line leading into an alcohol tank is connected, and in which a measuring device for determining an alcohol content in the condensate is provided in the line leading to the control valve. This design makes it possible that an alcohol content in the condensate carried in the line is detected by the measuring device and the control valve can then be controlled. This makes it possible, for example, when starting up a plant, to first feed the condensate completely to the first column of the rectifier and, for example, after reaching a pre-settable setpoint value for the alcohol content in the condensate, to control the control valve in such a way that part of the volume flow of the condensate is transferred to the alcohol tank and thus discharged from the plant.

Preferably, the control valve should be controllable by the measuring device or by a control device connected to the measuring device. If the control valve can be controlled directly by the measuring instrument, it is preferable that the setting of the alcohol content at which the condensate is to be removed is made directly at the measuring instrument. Furthermore, such an adjustment of the alcohol content may also be provided at a control device, in particular a central control device of the plant, in order to control the control valve accordingly.

Furthermore, it is preferably intended that the controllable control valve is designed as a three-way control valve. This allows a simple design for controlling the respective volume flows into the return line and/or the discharge line.

A density measuring device is preferably used to measure the alcohol content in the condensate. The density of the condensate is measured. For example, a set-value of the density of the condensate is set in the control device and the measured value is shown for example on a display in the control unit respectively the control device. If the measured value differs from the set-value or lies outside of a tolerance range of the set-value, which is preferably adjustable, the control device will drive the control valve to more or less open the orifice for the condensate to be fed into the return line to the first column.

A preferred design of the plant is that a separator is connected downstream of the condenser, from which the line leading to the controllable control valve leads. The arrangement of a separator downstream of the condenser is provided so that the non-condensable vapours are fed out of the plant.

The task underlying the invention is further solved by a method for reducing an alcohol content in a beverage in a plant in which an alcohol content in a condensate emerging from the condenser is detected by a measuring device for detecting an alcohol content in a condensate and a volume flow portion of the condensate, which is fed to a return line leading to the first column of the rectifier, and a volume flow portion of the condensate, which is fed to the discharge line leading to an alcohol tank, is controlled by a control valve. This enables automatic operation of the plant for the production of a beverage reduced in alcohol. By controlling the control valve, the condensate leaving the condenser can be fed several times to the first column in order to concentrate the condensate in the alcohol before the discharge out of the plant will be started. The proportionate removal of the condensate from the plant then takes place as soon as a preset alcohol content in the condensate is detected by the measuring device.

It is preferable that when the plant starts up, the discharge line is blocked and the return line is completely open and that the discharge line is also opened when the alcohol content in the condensate increases or when the setpoint value of the alcohol content in the condensate is reached. This ensures that condensate with a too low alcohol content is not discharged from the plant prematurely. This has the advantage of allowing further separation of fractional substances from the condensate in the first column. Furthermore, this control of the control valve has the advantage that a condensate with too high an alcohol content is no longer fed to the first column of the rectifier, which could no longer be vaporized during operation of the first column and could therefore get into the beverage to be reduced in the alcohol.

It is advantageous to set a setpoint value of an alcohol content in the condensate in the control device, at which the condensate is discharged from the plant. This enables a process-dependent control, whereby the proportion of the volume flow which is transferred to the return line and the discharge line is automatically adjusted. At the same time, this enables continuous discharge of the condensate with a set alcohol content, so that the plant can be operated without pressure fluctuations.

Before reaching the set point value of an alcohol content, the control valve will be opened slowly for feeding the alcohol in the discharge line and preferably is reducing the cross section of the orifice leading to the return line.

It is preferable to set a setpoint of 75 % - 80 % of the alcohol content in the condensate. This has the advantage that a sufficiently high concentration, but not too high a concentration.

The invention is described and explained in more detail below on the basis of the examples shown in the drawings. It is shown:

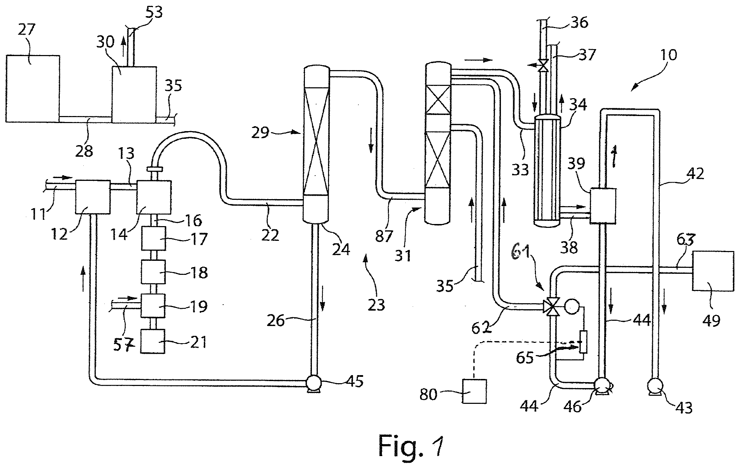

Figure 1 a circuit diagram of a plant for reducing an alcohol content in a beverage.

Figure 1 shows a schematic representation of a plant 10 for reducing the alcohol content of a beverage in accordance with the invention. Steam with a temperature of, for example, 110 °C is fed via a line 11 to a heat exchanger 12, the first circuit of which, in which this heat exchanger 12 is integrated, is not shown in detail. In the second circuit of heat exchanger 12 a line 13 is provided which leads to a separator 14. From the bottom of the separator 14 a pipe 16 emerges, which discharges the non-alcoholic beverage. The non-alcoholic beverage is preferably wine, sparkling wine or beer. In the outlet line 16 there is a heat exchanger 17, which cools down the temperature of the finished product and serves the heat economy. In addition, outlet line 16 contains a cooler 18 which cools the finished product down to 5 °C, for example. Finally, an inoculation station 19 follows, to which fractional substances such as _{CO2}, fragrances and/or aromatic substances are fed, which are separated by fraction recovery from vapours of the alcoholic beverage. Through the injection station 19, the fractional substances are discharged in doses into the outlet line 16 and mixed into the alcoholic beverage. Downstream of the inoculation station 19 there is a collecting container 21 for receiving the finished product, i.e. the reduced-alcohol beverage.

The term "reduced-alcohol drink" also includes drinks in which the alcohol contained in the drink is reduced to such an extent that these drinks are described as dealcoholised or non-alcoholic and may in particular also contain 0.0% alcohol.

From the head of the separator 14, a first vapour line 22 leads the warm, non-separated vapours to a lower area of a rectifier 23. This rectifier 23 comprises a second column or lower column 29. From the bottom 24 of the rectifier 23, a line 26 leads to the heat exchanger 12. This closes this circuit in which the reduced-alcohol beverage is led.

In a storage container 27, the alcoholic beverage is stored, which is to be reduced in alcohol content. A line 28 leads from the storage tank 27 to a degasser 30, in which fractional substances, especially _{CO2}, are discharged via a line 53. These fractional substances can be fed to a fractional substance recovery device not shown. These fractions are added to the reduced-alcohol beverage in the inoculation station 19. From the deaerator 30, line 35 leads to the second circuit of plant 10. The alcoholic beverage is fed via line 35 to the middle section of a first column 31 of the rectifier 23. A second vapour line 33 is provided at the upper end region of the rectifier 23 or at the head of the rectifier 23, which discharges the vapours containing alcohol, flavour and/or aromas. The temperature at the head of the first column 31 is, for example, 30 °C. This corresponds to approximately 44 mbar. The temperature in rectifier 23 above tray 24 is, for example, 39 °C at a pressure of, for example, 70 mbar.

A third vapour line 87 is provided between the second column 29 and the first column 31. Instead of the two-part rectifier 23, a vessel may also be provided in which the first and second columns 29, 31 are arranged one above the other. The third vapour line 87 can be omitted.

From the first column 31 of rectifier 23, the second vapour line 33 feeds vapours containing alcohol to a condenser 34. Alcohol is always understood to be ethyl alcohol. The condenser 34 can be cooled via a line 36 by a coolant, especially glycol. Heated coolant is discharged through a line 37. The vapours are cooled and condensed in the condenser 34. The cooled condensate and not condensable vapours are fed via line 38 to a separator 39. A vacuum line 42 leads into the head of the separator 39 and is connected to a pump 43 designed as a vacuum pump. A line 44 is connected to the bottom of the separator 39, which drains the condensate from the separator 39. Via a pump 46 the condensate is fed to a control valve 61 located at the end of line 44. This control valve 61 is, in particular designed as a controllable three-way control valve. A first branch of the control valve 61 leads into a return line 62, which opens into the head of the first column 31. A second branch of the control valve 61 is connected to a discharge line 63, which leads into an alcohol tank 49.

Preferably downstream of pump 46 and upstream of the control valve 61, a measuring device 65 is provided in line 44, by which an alcohol content in the condensate carried in line 44 can be detected. This measuring device 65 is preferably designed as a density measuring device which can measure the density in the condensate and can forward the measured values to a control device 80.

The measuring device 65 and/or the control valve 61 are connected to a schematic control device 80 via a control line shown only schematically. This control device 80 may be provided in a control cabinet not shown in detail. Several components, sensors, control elements or the like in the plant 10 can be monitored, adjusted and/or controlled by this control device 80.

In the control device 80, a setpoint value for an alcohol content in the condensate can be set, which can be discharged from the plant 10 via the control valve 61, i.e. when the alcohol content in the condensate is reached, at least a portion of a volume flow of the condensate is transferred to the alcohol tank 49 via the discharge line 63.

When plant 10 is commissioned for a production cycle for a beverage, the percentage alcohol content in the condensate is set in the control unit 80, among other things. During the start-up phase of plant 10, the measuring device 65 upstream of control valve 61 records an alcohol content that is lower than the setpoint value. This activates the control valve 61 so that the discharge line 63 is closed and the return line 62 is completely open. As soon as the plant has started up and will reach a steady state, the measuring device 65 can determine that the condensate in line 44 contains an alcohol content that is close to the set point. The discharge line 63 can then be opened increasingly to discharge the condensate.

In a steady state, for example, 60 % to 65 % of the condensate from line 44 can be transferred to return line 62 and 35 % to 40 % of the condensate value can be transferred to the discharge line 63.

The query of the measured values at the measuring device 65, which can be carried out continuously or at intervals that can be set in terms of time, enables automatic concentration of the condensate in a start-up phase and continuous discharge of the condensate with an alcohol content that corresponds to the set target value. Therefore the control valve 61 will be controlled by the control device 80 in order to keep the alcohol concentration at the approximate same level which is then transferred over the discharge line 63 to the alcohol tank 49.

In the plants described above, a condensate with an alcohol content of 20 % - 80 %, preferably with an alcohol content of 75 % - 80 % in the condensate, is discharged.

## Claims

1. Plant for reducing the alcohol content in a beverage,
- with a degasser (30), to which the alcoholic beverage is fed from a storage container (27) connectable thereto,
- with a rectifier (23) which comprises a first column (31) and a second column (29) which are arranged one above the other in a common housing or which are arranged separately and spatially adjacent to one another,
- with a line (26) branching off from a bottom (24) of the second column (29), in which line a pump (45) is provided which conveys a reduced-alcohol beverage to a separator (14), from which the reduced-alcohol beverage is discharged from the plant (10) via an outlet line (16) or a collecting container (21),
- with a condenser (34) which is connected downstream of the rectifier (23),
- with a line (44) which discharges from the condenser (34) and in which a pump (46) is provided, through which a condensate discharged from the condenser (34) is fed via a return line (62) to the first column (31) and/or is fed via a discharge line (63) to an alcohol tank (49),
**characterized in that**,
- a controllable control valve (61) to which the return line (62) and the discharge line (63) are connected is provided at the end of the line (44), and
- that a measuring device (65) for determining an alcohol content in the condensate is provided in the line (44) upstream of the controllable control valve (61).

2. Plant according to claim 1, **characterized in that** the control valve (61) is activated by the measuring device (65) or via a control device (80) connected to the measuring device (65).

3. Plant according to claim 1 or 2, **characterized in that** the control valve (61) is designed as a three-way control valve which is preferably continuously controllable.

4. Plant (10) according to one of the preceding claims, **characterized in that** the measuring device (65) is a density measuring device.

5. Plant (10) according to one of the preceding claims, **characterized in that** a separator (39) is provided downstream of the condenser (34), from which the line (44) leads away.

6. A method for reducing an alcohol content in a beverage in a plant (10) according to any one of claims 1 to 5, **characterized in that** an alcohol content in the condensate is detected by the measuring device (65) and a volume flow of the condensate supplied into the return line (62) and a volume flow of the condensate supplied into the discharge line (63) is controlled by the control valve (61).

7. Method according to claim 6, **characterized in that** a setpoint value for an alcohol content, preferably between 20% and 80% and in particular between 75 % and 80 %, in the condensate which is led out of the plant (10), is set in a control device (80), and **in that** the respective volume flow into the return line (62) and/or the discharge line (63) is controlled by the control valve (61) as a function of the detected values of the measuring device (65).

8. Method according to claim 6 or 7, **characterized in that**, when the plant (10) is started up, the discharge line (63) is blocked and the return line (62) is completely opened and, as the alcohol content in the condensate increases, the volume flow in the discharge line (63) is increased and the volume flow in the return line (62) is reduced.

9. Method according to one of claims 6 to 8, **characterized in that** in a steady state of the plant (10) a volume flow with a percentage of the condensate of 50% to 70% is fed to the return line (62) and a percentage of the volume flow of 30% to 50% is fed to the discharge line (63).

## Patentansprüche

1. Anlage zur Reduzierung des in einem Getränk vorhandenen Alkoholgehalts,
- mit einem Entgaser (30), welchem das alkoholische Getränk aus einem damit verbindbaren Speicherbehälter (27) zugeführt wird,
- mit einem Rektifikator (23), welcher einen erste Kolonne (31) und eine zweite Kolonne (29) umfasst, die übereinander in einem gemeinsamen Gehäuse angeordnet sind oder die getrennt und räumlich benachbart zueinander angeordnet sind,
- mit einer Leitung (26), die aus einem Boden (24) der zweiten Kolonne (29) herausführt und in welcher eine Pumpe (45) vorgesehen ist, die ein alkoholreduziertes Getränk zu einem Separator (14) befördert, von dem aus das alkoholreduzierte Getränk über eine Auslassleitung (16) oder einen Sammelbehälter (21) aus der Anlage (10) abgeführt wird,
- mit einem Kondensator (34), welcher dem Rektifikator (23) nachgeordnet verbunden ist,
- mit einer Leitung (44), welche von dem Kondensator (34) wegführt und in welcher eine Pumpe (46) vorgesehen ist, durch die ein von dem Kondensator (34) abgeführtes Kondensat über eine Rückflussleitung (62) der ersten Kolonne (31) zugeführt wird und/oder über eine Abführleitung (63) einem Alkoholtank (49) zugeführt wird,
**dadurch gekennzeichnet, dass**
- ein ansteuerbares Regelventil (61), mit dem die Rückflussleitung (62) und die Abführleitung (63) verbunden sind, am Ende der Leitung (44) vorgesehen ist, und
- eine Messvorrichtung (65) zum Bestimmen eines in dem Kondensat vorhandenen Alkoholgehalts dem ansteuerbaren Regelventil (61) vorgeordnet in der Leitung (44) vorgesehen ist.

2. Anlage nach Anspruch 1, **dadurch gekennzeichnet, dass** das Regelventil (61) durch die Messvorrichtung (65) oder über eine mit der Messvorrichtung (65) verbundene Regeleinrichtung (80) angesteuert wird.

3. Anlage nach Anspruch 1 oder 2, **dadurch gekennzeichnet, dass** das Regelventil (61) als ein Dreiwege-Regelventil konzipiert ist, welches vorzugsweise kontinuierlich ansteuerbar ist.

4. Anlage (10) nach einem der vorstehenden Ansprüche, **dadurch gekennzeichnet, dass** es sich bei der Messvorrichtung (65) um eine Dichtemessvorrichtung handelt.

5. Anlage (10) nach einem der vorstehenden Ansprüche, **dadurch gekennzeichnet, dass** dem Kondensator (34) nachgeordnet ein Separator (39) vorgesehen ist, von dem die Leitung (44) wegführt.

6. Verfahren zur Reduzierung eines in einem Getränk vorhandenen Alkoholgehalts in einer Anlage (10) nach einem der Ansprüche 1 bis 5, **dadurch gekennzeichnet, dass** ein in dem Kondensat vorhandener Alkoholgehalt von der Messvorrichtung (65) ermittelt wird und ein Volumenstrom des in die Rückflussleitung (62) eingespeisten Kondensats sowie ein Volumenstrom des in die Abführleitung (63) eingespeisten Kondensats durch das Regelventil (61) geregelt wird.

7. Verfahren nach Anspruch 6, **dadurch gekennzeichnet, dass** ein Sollwert, vorzugsweise zwischen 20 % und 80 % und insbesondere zwischen 75 % und 80 %, für einen Alkoholgehalt des aus der Anlage (10) herausgeführten Kondensats in einer Regeleinrichtung (80) eingestellt wird, und dass der in die Rückflussleitung (62) und/oder in die Abführleitung (63) fließende Volumenstrom durch das Regelventil (61) jeweils in Abhängigkeit von den ermittelten Werten der Messvorrichtung (65) geregelt wird.

8. Verfahren nach Anspruch 6 oder 7, **dadurch gekennzeichnet, dass** wenn die Anlage (10) in Betrieb genommen wird, die Abführleitung (63) abgesperrt ist und die Rückflussleitung (62) vollständig geöffnet ist, und dass in dem Maß, in welchem sich der Alkoholgehalt in dem Kondensat erhöht, der Volumenstrom in der Abführleitung (63) erhöht wird und der Volumenstrom in der Rückflussleitung (62) verringert wird.

9. Verfahren nach einem der Ansprüche 6 bis 8, **dadurch gekennzeichnet, dass** in einem stabilen Betriebszustand der Anlage (10) ein Volumenstrom mit einem Prozentanteil des Kondensats von 50 % bis 70 % der Rückflussleitung (62) zugeführt wird und ein Prozentanteil des Volumenstroms von 30 % bis 50 % der Abführleitung (63) zugeführt wird.

## Revendications

1. Installation destinée à réduire la teneur en alcool dans une boisson,
- pourvue d'un dégazeur (30) auquel est amenée la boisson alcoolisée provenant d'un réservoir de stockage (27) qui peut être relié à celui-ci,
- pourvue d'un rectificateur (23) qui comprend une première colonne (31) et une deuxième colonne (29) qui sont disposées de manière superposée dans un carter commun ou qui sont disposées de manière séparée et à proximité l'une de l'autre,
- pourvue d'un tuyau (26) qui sort d'un fond (24) de la deuxième colonne (29) et dans lequel est prévue une pompe (45) qui transporte une boisson à teneur réduite en alcool jusque dans un séparateur (14) depuis lequel la boisson à teneur réduite en alcool est évacuée de l'installation (10) par l'intermédiaire d'un tuyau de sortie (16) ou d'un bac collecteur (21),
- pourvue d'un condenseur (34) qui est relié en aval du rectificateur (23),
- pourvue d'un tuyau (44) qui part du condenseur (34) et dans lequel est prévue une pompe (46) grâce à laquelle un condensat évacué du condenseur (34) est amené à la première colonne (31) par l'intermédiaire d'un tuyau de retour (62) et/ou est amené à une cuve d'alcool (49) par l'intermédiaire d'un tuyau d'évacuation (63),
**caractérisée en ce que**
- une soupape de réglage activable (61) à laquelle sont reliés le tuyau de retour (62) et le tuyau d'évacuation (63) est prévue à l'extrémité du tuyau (44), et
- un dispositif de mesure (65) destiné à déterminer une teneur en alcool dans le condensat est prévu dans le tuyau (44), en amont de la soupape de réglage activable (61).

2. Installation selon la revendication 1, **caractérisée en ce que** la soupape de réglage (61) est activée par le dispositif de mesure (65) ou par l'intermédiaire d'un dispositif de réglage (80) relié au dispositif de mesure (65).

3. Installation selon la revendication 1 ou 2, **caractérisée en ce que** la soupape de réglage (61) est conçue en tant que soupape de réglage à trois voies qui peut être activée de préférence de manière continue.

4. Installation (10) selon l'une quelconque des revendications précédentes, **caractérisée en ce que** le dispositif de mesure (65) est un dispositif de mesure de densité.

5. Installation (10) selon l'une quelconque des revendications précédentes, **caractérisée en ce qu'**un séparateur (39) à partir duquel part le tuyau (44) est prévu en aval du condenseur (34).

6. Procédé destiné à réduire dans une installation (10) selon l'une quelconque des revendications 1 à 5 une teneur en alcool dans une boisson, **caractérisé en ce qu'**une teneur en alcool dans le condensat est déterminée grâce au dispositif de mesure (65) et qu'un débit volumique du condensat conduit dans le tuyau de retour (62) ainsi qu'un débit volumique du condensat conduit dans le tuyau d'évacuation (63) sont régulés par la soupape de réglage (61).

7. Procédé selon la revendication 6, **caractérisé en ce qu'**une valeur de consigne, de préférence comprise entre 20 % et 80 % et en particulier comprise entre 75 % et 80 %, pour une teneur en alcool du condensat à la sortie de l'installation (10) est définie dans un dispositif de régulation (80), et **en ce que** le débit volumique qui passe dans le tuyau de retour (62) et/ou dans le tuyau d'évacuation (63) est régulé respectivement par la soupape de réglage (61) en fonction des valeurs déterminées par le dispositif de mesure (65).

8. Procédé selon la revendication 6 ou 7, **caractérisé en ce que** lorsque l'installation (10) est mise en marche, le tuyau d'évacuation (63) est fermé et le tuyau de retour (62) est complètement ouvert, et **en ce que** le débit volumique dans le tuyau d'évacuation (63) est augmenté et le débit volumique dans le tuyau de retour (62) est diminué à mesure que la teneur en alcool dans le condensat augmente.

9. Procédé selon l'une quelconque des revendications 6 à 8, **caractérisé en ce que** dans un état de fonctionnement stable de l'installation (10), un débit volumique correspondant à un pourcentage de condensat compris entre 50 % et 70 % est amené au tuyau de retour (62) et un pourcentage de débit volumique compris entre 30 % et 50 % est amené au tuyau d'évacuation (63).
